(19) **Europäisches Patentamt / European Patent Office / Office européen des brevets**

(11) **EP 1 711 343 B1**

(12) **EUROPEAN PATENT SPECIFICATION**

(45) Date of publication and mention
of the grant of the patent:
**30.06.2010 Bulletin 2010/26**

(21) Application number: **04811071.2**

(22) Date of filing: **15.11.2004**

(51) Int Cl.:
*B32B 37/20* (2006.01)　　*B29C 55/18* (2006.01)
*B32B 3/28* (2006.01)

(86) International application number:
**PCT/US2004/038214**

(87) International publication number:
**WO 2005/065947 (21.07.2005 Gazette 2005/29)**

(54) **METHOD OF MAKING EXTENSIBLE AND STRETCH LAMINATES**

vERFAHREN ZUR HERSTELLUNG VON DEHNBAREN UND STRECKBAREN LAMINATEN

PROCÉDÉ DE FABRICATION DE LAMINÉS EXTENSIBLES ET ÉTIRABLES

(84) Designated Contracting States:
**DE GB**

(30) Priority: **22.12.2003 US 743245**

(43) Date of publication of application:
**18.10.2006 Bulletin 2006/42**

(73) Proprietor: **KIMBERLY-CLARK WORLDWIDE, INC.
Neenah, WI 54956 (US)**

(72) Inventors:
• **PACHECO, Jose, Enrique, Maldonado
Dunwoody, GA 30338 (US)**
• **MCCORMACK, Ann, Louise
Cumming, GA 30041 (US)**
• **ELLISON, Charles, Herman
Alpharetta, GA 30022 (US)**

• **MARTIN, Timothy, Ray
Alpharetta, GA 30004 (US)**
• **NG, Wing-Chak
Suwanee, GA 30024 (US)**
• **POTNIS, Prasad, Shrikrishna
Duluth, GA 30097 (US)**
• **FAIRBANKS, Jason, Sybren
Gainesville, GA 30506 (US)**

(74) Representative: **Davies, Christopher Robert
Dehns
St Bride's House
10 Salisbury Square
London
EC4Y 8JD (GB)**

(56) References cited:
**EP-A- 0 556 749　　WO-A-2004/020174
US-A- 5 455 992　　US-B1- 6 383 431**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The present invention relates to methods for making extensible and stretchable laminates.

**BACKGROUND**

Film and film/nonwoven laminates are used in a wide variety of applications, not the least of which is as outercovers / backsheets for limited use or disposable products including personal care absorbent artictes such as diapers, training pants, swimwear, incontinence garments, feminine hygiene products, wound dressings, bandages and the like. Film/nonwoven laminates also have applications in the protective cover area, such as car, boat or other object cover components, tents (outdoor recreational covers), and in the health care area in conjunction with such products as surgical drapes, hospital gowns and fenestration reinforcements. Additionally, such materials have applications in other apparel for clean room, health care and other uses such as agricultural fabrics (row covers).

In the personal care area in particular, there has been an emphasis on the development of film laminates which have good barrier properties, especially with respect to liquids, as well as good aesthetic and tactile properties such as hand and feel. There has been a further emphasis on the "stretch" comfort of such laminates, that is, the ability of the laminates to "give" as a result of the product utilizing such laminates being elongated in use.

Many such laminates used in consumer products are constructed with nonwoven facings which are necked (i.e., stretched in the machine direction and allowed to contract in width) and laminated to an extensible film. The necking of the nonwoven facing provides the laminate with cross-machine direction extensibility. A greater degree of necking in the nonwoven facings results in greater extensibility in the finished laminate. However, this necking of the facings reduces the base machine efficiency, as measured in square yards per hour. When facings are necked there is a corresponding loss of web width. This loss of width translates into an inefficient use of the full width of available nonwoven. The higher the degree of necking of the nonwoven facing results in lower efficiency in machine width utilization.

US-6,383,431-B1 describes a method of modifying a nonwoven fibrous web for use as component of a disposable absorbent article.

This disclosure describes also a method of producing a laminate material comprising the steps of providing a first flexible sheet material, providing a second flexible sheet material having a first surface and a second surface, providing forming surfaces having grooves formed therein, providing mating surfaces having fins positioned to fit within the grooves of said forming surfaces, forming successive nips between the forming surfaces and the mating surfaces wherein the fins of the mating surfaces enter the grooves of the forming surfaces, feeding said first flexible sheet material into the successive nips, stretching said first flexible sheet material a plurality of times along lines on the first flexible sheet material by the fins entering the forming surface grooves along with said first flexible sheet material within successive nips, applying adhesive to said first flexible sheet material, and joining the stretched first flexible sheet material in a face to face configuration to the first surface of the second flexible sheet material.

EP-0,556,749-A discloses a sheet elastic complex used in sanitary products, its manufacturing process, and its usages.

It would therefore be desired to produce a laminate that has a higher level of extensibility at lower tensions. It would also be desired to provide a similar laminate with elasticity at low tension levels. It would further be desirable to produce such extensible or elastic laminates with more efficient use of nonwoven facings. The present invention addresses these and other opportunities for improvement.

**SUMMARY OF THE INVENTION**

The present invention provides a method as defined in claim 1.

In one embodiment, the fins of the successive mating surfaces enter the grooves of the respective successive nips to a different degree providing a different amount of stretch to the first flexible sheet material at the different nips.

In another embodiment, the forming surface is a drum and the plurality of mating surfaces are satellite rolls positioned at different locations with respect to the drum.

In another embodiment, the first flexible sheet material is stretched in the cross-machine direction.

In each embodiment the spacing and depth of the respective grooves and mating surfaces may be widely varied to produce the desired properties in the treated web. In a specific embodiment, the number of grooves and corresponding fins per inch may be in the range of about 3 to about 15. and penetrate the grooves to a depth that will be determined by factors such as the number of impacts and the degree of stretch desired.

In an embodiment of the present invention the first flexible sheet material is a nonwoven web. Generally, the nonwoven web of the present invention, prior to stretching, has a basis weight in the range of about 10 gsm to about 150 gsm.

In another embodiment, the second flexible sheet material is a polymeric film. The polymeric film used in each of the embodiments can be a breathable film. The film may also be, or alternatively be, a multi-directional stretchable film. In one embodiment, the film is stretched before it is joined with the stretched first flexible sheet material.

In another embodiment, after the first flexible sheet material is stretched it has a corrugated surface comprised of a series of surface contacting peaks separated by recessed troughs therebetween. When the stretched first flexible sheet material is joined to the second flexible sheet material, the two materials are joined at the discrete points where the series of surface contacting peaks of the stretched first flexible sheet material contact the surface of the second flexible sheet material.

In a further embodiment, the slot coat adhesive system then applies the adhesive substantially to the series of surface contacting peaks of the stretched first flexible sheet material.

In an aspect not in accordance with the present invention, a laminate of a first flexible sheet material is provided, having a corrugated surface made up of a series of surface contacting peaks separated by recessed troughs therebetween, and a second flexible sheet material. The second flexible sheet material is joined to the first flexible sheet material in a face to face configuration at the discrete points where the surface contacting peaks of the first flexible sheet material contact the second flexible sheet material. In one embodiment the second flexible sheet material is a polymeric film. More specifically, the polymeric film can be extensible and may also be breathable. Alternatively, the polymeric film may be a multi-directional stretch film.

## BRIEF DESCRIPTION OF THE DRAWINGS

FIG. 1 is a schematic of an overall laminate process configuration incorporating the present invention.

FIG. 2 is a representation of a cross-sectional view of the material laminate of the present invention

FIG. 3 is a representation of a perspective view of a grooved roll apparatus which may be used to stretch the nonwoven layer in accordance with the invention.

FIG. 4 is a detailed partial view of an engaged nip configuration.

FIG. 5 is a drawing of a diaper made in accordance with the invention.

FIG. 6 is a drawing of a training pant made in accordance with the invention.

FIG. 7 is a drawing of an absorbent underpant made in accordance with the invention

FIG. 8 is a drawing of a feminine hygiene product made in accordance with the invention.

FIG. 9 is a drawing of an adult incontinence product made in accordance with the invention.

## DETAILED DESCRIPTION

Definitions

As used herein and in the claims, the term "comprising" is inclusive or open-ended and does not exclude additional unrecited elements, compositional components, or method steps.

As used herein, the term "personal care product" means generally absorbent products for use to absorb and/or dispose of bodily fluids, including but not limited to diapers, training pants, swimwear, absorbent underpants, adult incontinence products, and feminine hygiene products, such as feminine care pads, napkins and pantiliners. It also includes absorbent products for veterinary, medical and mortuary applications.

As used herein, the term "protective cover" means a cover for vehicles such as cars, trucks, boats, airplanes, motorcycles, bicycles, golf carts, etc., covers for equipment often left outdoors like grills, yard and garden equipment (mowers, rototillers, etc.) and lawn furniture, as well as floor coverings, table cloths and picnic area covers. It also includes covers for medical applications such as surgical drapes, gowns, etc.

As used herein the term "protective outer wear" means garments used for protection in the workplace, such as surgical gowns, hospital gowns, masks, and protective overalls.

As used herein, the term "machine direction" or MD means the length of a web in the direction in which it is produced. The term "cross machine direction" or CD means the width of fabric, i.e. a direction generally perpendicular to the MD.

As used herein the term "nonwoven fabric or web" means a web having a structure of individual fibers or threads which are interlaid, but not in an identifiable manner as in a knitted fabric. Nonwoven fabrics or webs have been formed from many processes such as for example, meltblowing processes, spunbonding processes, and bonded carded web processes. The basis weight of nonwoven fabrics is usually expressed in ounces of material per square yard (osy) or grams per square meter (g/m$^2$ or gsm) and the fiber diameters useful are usually expressed in microns. (Note that to convert from osy to gsm, multiply osy by 33.91).

As used herein the terms "sheet" and "sheet material" shall be interchangeable and in the absence of a word modifier, refer to woven materials, nonwoven webs, polymeric films, polymeric scrim-like materials, and polymeric foam sheeting.

As used herein the term "microfibers" means small diameter fibers having an average diameter not greater than about 75 microns, for example, having an average diameter of from about 0.5 microns to about 50 microns, or more particularly, microfibers may have an average diameter of from about 2 microns to about 25 microns. Another frequently used expression of fiber diameter is denier, which is defined as grams per 9000 meters of a fiber and may be calculated as fiber diameter in microns squared, multiplied by the density in grams/cc, multiplied by 0.00707. A lower denier indicates a finer fiber and a higher denier indicates a thicker or heavier fiber. For example, the diameter of a polypropylene fiber given as 15 microns may be converted to denier by squaring, multiplying the result by 0.89 g/cc and multiplying by 0.00707. Thus, a 15 micron polypropylene fiber has a denier of about 1.42 ($15^2$ x 0.89 x .00707 = 1.415). Outside the United States the unit of measurement is more commonly the "tex", which is defined as the grams per kilometer of fiber. Tex may be calculated as denier/9.

As used herein the term "spunbond" refers to small diameter fibers which are formed by extruding molten thermoplastic material as filaments from a plurality of fine, usually circular capillaries of a spinneret with the diameter of the extruded filaments being rapidly reduced as by for example in U.S. Pat. No. 4,340,563 to Appel et al., and U.S. Pat. No. 3,692.618 to Dorschner et al., U.S. Pat. No. 3,802,817 to Matsuki et al., U.S. Pat. No. 3,338,992 and 3.341,394 to Kinney, U.S. Pat. No. 3,542,615 to Dobo et al.

As used heroin the term "meltblown" means fibers formed by extruding a molten thermoplastic material through a plurality of fine, usually circular die capillaries as molten threads or filaments into converging high velocity gas (e.g. air) streams which attenuate the filaments of molten thermoplastic material to reduce their diameter, which may be to microfiber diameter. Thereafter, the meltblown fibers are carried by the high velocity gas stream and are deposited on a collecting surface to form a web of randomly dispersed meltblown fibers. Such a process is disclosed, in various patents and publications, including NRL Report 4364, "Manufacture of Super-Fine Organic Fibers" by B. A. Wendt, E. L. Boone and D.D. Fluharty; NRL Report 5265, "An Improved Device For The Formation of Super-Fine Thermoplastic Fibers" by K.D. Lawrence, R. T. Lukas, J. A. Young; and U.S. Patent No. 3,849,241, issued November 19, 1974, to Butin, et al

As used herein, the term "bonded carded webs" refers to webs that are made from staple fibers which are usually purchased in bales. The bales are placed in a fiberizing unit/picker which separates the fibers. Next, the fibers are sent through a combining or carding unit which further breaks apart and aligns the staple fibers In the machine direction so as to form a machine direction-oriented fibrous non-woven web. Once the web has been formed, it is then bonded by one or more of several bonding methods, One bonding method is powder bonding wherein a powdered adhesive is distributed throughout the web and then activated, usually by heating the web and adhesive with hot air. Another bonding method is pattern bonding wherein heated calender rolls or ultrasonic bonding equipment is used to bond the fibers together, usually in a localized bond pattern through the web and or alternatively the web may be bonded across its entire surface if so desired. When using bi-component staple fibers, through-air bonding equipment is, for many applications, especially advantageous.

As used herein, the term "coform" means a process in which at least one meltblown die head is arranged near a chute through which other materials are added to the web while it is forming. Such other materials may be pulp, superabsorbent particles, cellulose or staple fibers, for example. Coform processes are shown in U.S. Patents 4,818,464 to Lau and 4,100,324 to Anderson et al.

As used herein "multilayer laminate" means a laminate wherein one or more of the layers may be spunbond and/or meltblown such as a spunbond/meltblown/spunbond (SMS) laminate and others as disclosed in U.S. Patent 4.041,203 to Brock et al., U.S. Patent 5,169,706 to Collier, et al, US Patent 5.145,727 to Potts et al., US Patent 5,178,931 to Perkins et al. and U.S. Patent 5,188,885 to Timmons et al. Such a laminate may be made by sequentially depositing onto a moving forming bell first a spunbond fabric layer, then a meltblown fabric layer and last another spunbond layer and then bonding the laminate in a manner described below. Alternatively, the fabric layers may be made individually, collected in rolls, and combined in a separate bonding step. Such fabrics usually have a basis weight of from about 0.1 to 12 osy (6 to 400 gsm), or more particularly from about 0.75 to about 3 osy. Muitilayer laminates for many applications also have one or more film layers which may take many different configurations and may include other materials like foams, tissues, woven or knitted webs and the like.

As used herein the term "laminate" refers to a composite structure of two or more sheet material layers that have been adhered through a bonding step, such as through adhesive bonding, thermal bonding, point bonding, pressure bonding, extrusion coating or ultrasonic bonding.

As used herein the term "polymer" generally includes but is not limited to, homopolymers, copolymers, such as for example, block, graft, random and alternating copolymers, terpolymers, etc. and blends and modifications thereof. Furthermore, unless otherwise specifically limited, the term "polymer" includes all possible geometrical configurations of the molecule. These configurations include, but are not limited to isotactic, syndiotactic and random symmetries.

As used herein the term "monocomponent" fiber refers to a fiber formed from one or more extruders using only one polymer. This is not meant to exclude fibers formed from one polymer to which small amounts of additives have been added for color, antistatic properties, lubrication, hydrophilicity, etc. These additives, e.g. titanium dioxide for color, are generally present in an amount less than 5 weight percent and more typically about 2 weight percent.

As used herein the term "conjugate fibers" refers to fibers which have been formed from at least two polymers extruded from separate extruders but spun together to form one fiber. Conjugate fibers are also sometimes referred to as multicomponent or bicomponent fibers. The polymers are usually different from each other though conjugate fibers may be monocomponent fibers. The polymers are arranged in substantially constantly positioned distinct zones across the cross-section of the conjugate fibers and extend continuously along the length of the conjugate fibers. The configuration of such a conjugate fiber may be, for example, a sheath/core arrangement wherein one polymer is surrounded by another or may be a side by side arrangement, a pie arrangement or an "islands-in-the-sea" arrangement. Conjugate fibers are taught in US Patent 5,108,820 to Kaneko et al., US Patent 4,795,668 to Krueger et al., US Patent 5,540,992 to Marcher et al. and US Patent 5,336,552 to Strack et al. Conjugate fibers are also taught in US Patent 5,382,400 to Pike et al. and may be used to produce crimp in the fibers by using the differential rates of expansion and contraction of the two (or more) polymers. Crimped fibers may also be produced by mechanical means and by the process of German Patent DT 25 13 251 A1. For two component fibers, the polymers may be present in ratios of 75/25, 50/50, 25/75 or any other desired ratios. The fibers may also have shapes such as those described in US Patents 5,277,976 to Hogle et al., US Patent 5,466,410 to Hills and 5,069,970 and 5,057,368 to Largman et al., which describe fibers with unconventional shapes.

As used herein the term "biconstituent fibers" refers to fibers which have been formed from at least two polymers extruded from the same extruder as a blend. The term "blend" is defined below. Biconstituent fibers do not have the various polymer components arranged in relatively constantly positioned distinct zones across the cross-sectional area of the fiber and the various polymers are usually not continuous along the entire length of the fiber, instead usually forming fibrils or protofibrils which start and end at random. Biconstituent fibers are sometimes also referred to as multiconstituent fibers. Fibers of this general type are discussed in, for example, US Patents 5,108,827 and 5,294,482 to Gessner. Bicomponent and biconstituent fibers are also discussed in the textbook Poylmer Blends and Composites by John A. Manson and Leslie H. Sperling, copyright 1976 by Plenum Press, a division of Plenum Publishing Corporation of New York, IBSN 0-306-30831-2, at pages 273 through 277.

As used herein the term "blend" means a mixture of two or more polymers while the term "alloy" means a subclass of blends wherein the components are immiscible but have been compatibilized. "Miscibility" and "immiscibility" are defined as blends having negative and positive values, respectively, for the free energy of mixing. Further, "compatibilization" is defined as the process of modifying the interfacial properties of an immiscible polymer blend in order to make an alloy.

As used herein, the term "bond" and derivatives does not exclude intervening layers between the bonded elements that are part of the bonded structure unless the text requires a different meaning.

As used herein the term "thermal point bonding" involves passing a fabric or web of fibers to be bonded between a heated calender roll and an anvil roll. The calender roll is usually, though not always, patterned in some way so that the entire fabric is not bonded across its entire surface, and the anvil roll is usually flat. As a result, various patterns for calender rolls have been developed for functional as well as aesthetic reasons. One example of a pattern has points and is the Hansen Pennings or "H&P" pattern with about a 30% bond area with about 200 bonds/square inch as taught in U.S. Patent 3,855,046 to Hansen and Pennings. The H&P pattern has square point or pin bonding areas wherein each pin has a side dimension of 0.038 inches (0.965 mm), a spacing of 0.070 inches (1.778 mm) between pins, and a depth of bonding of 0.023 inches (0.584 mm). The resulting pattern has a bonded area of about 29.5%. Another typical point bonding pattern is the expanded Hansen Pennings or "EHP" bond pattern which produces a 15% bond area with a square pin having a side dimension of 0.037 inches (0.94 mm), a pin spacing of 0.097 inches (2.464 mm) and a depth of 0.039 inches (0.991 mm). Another typical point bonding pattern designated "714" has square pin bonding areas wherein each pin has a side dimension of 0.023 inches, a spacing of 0.062 inches (1.575 mm) between pins, and a depth of bonding of 0.033 inches (0.838 mm). The resulting pattern has a bonded area of about 15%. Yet another common pattern is the C-Star pattern which has a bond area of about 16.9%. The C-Star pattern has a cross-directional bar or "corduroy" design interrupted by shooting stars. Other common patterns include a diamond pattern with repeating and slightly offset diamonds with about a 16% bond area and a wire weave pattern looking as the name suggests, e.g. like a window screen pattern having a bond area in the range of from about 15% to about 21% and about 302 bonds per square inch. Typically, the percent bonding area varies from around 10% to around 30% of the area of the fabric laminate web. As is well known in the art, the spot bonding holds the laminate layers together as well as imparts integrity to each individual layer by bonding filaments and/or fibers within each layer.

As used herein, the term "ultrasonic bonding" means a process performed, for example, by passing the fabric between a sonic horn and anvil roll as illustrated in U.S. Patent 4,374,888 to Bornslaeger.

As used herein, the term "adhesive bonding" means a bonding process which forms a bond by application of an adhesive. Such application of adhesive may be by various processes such as slot coating, spray coating and other topical applications. Further, such adhesive may be applied within a product component and then exposed to heat and/or pressure such that contact of a second product component with the adhesive containing product component forms an adhesive bond between the two components,

As used herein, the term "elastomeric" shall be interchangeable with the term "elastic" and refers to material which, upon application of a stretching force, is stretchable in at least one direction (such as the CD direction), and which upon release of the stretching force contracts/returns to approximately its original dimension. For example, a stretched material having a stretched length which is at least 50 percent greater than its relaxed unstretched length, and which will recover to within at least 50 percent of its stretched length upon release of the stretching force. A hypothetical example would be a one (1) inch (2.54 cm) sample of a sheet material which is stretchable to at least 1.50 (3.81cm) inches and which, upon release of the stretching force, will recover to a length of not more than 1.25 inches (3.18cm). Desirably, such elastomeric sheet contracts or recovers up to 50 percent of the stretch length in the cross machine direction using a cycle test as described herein to determine percent set. Even more desirably, such elastomeric sheet material recovers up to 80 percent of the stretch length in the cross machine direction using a cycle test as described. Even more desirably, such elastomeric sheet material recovers greater than 80 percent of the stretch length in the cross machine direction using a cycle test as described. Desirably, such elastomeric sheet is stretchable and recoverable in both the MD and CD directions. For the purposes of this application, values of load loss and other "elastomeric functionality testing" have been generally measured in the CD direction, unless otherwise noted. Unless otherwise noted, such test values have been measured at the 50 percent elongation point of a 70 percent total elongation cycle.

As used herein, the term "elastomer" shall refer to a polymer which is elastomeric.

As used herein, the term "thermoplastic" shall refer to a polymer which is capable of being melt processed.

As used herein, the term "inelastic" or "nonelastic" refers to any material which does not fall within the definition of "elastic" above.

As used herein the terms "recover", "recovery" and "recovered" shall be used interchangeably and shall refer to a contraction (retraction) of a stretched material upon termination of a stretching force following stretching of the material by application of the stretching force. For example, if a material having a relaxed, unstretched length of 1 inch (2.5 cm) is elongated fifty percent by stretching to a length of 1.5 inches (3.75 cm), the material would be elongated 50 percent and would have a stretched length that is 150 percent of its relaxed length or stretched 1.5X (times). If this exemplary stretched material contracted, that is recovered to a length of 1.1 inches (2.75 cm) after release of the stretching force, the material would have recovered 80 percent of its 0.5 inch (1.25 cm) elongation. Percent recovery may be expressed as [(maximum stretch length-final sample length)/ (maximum stretch length - initial sample length)] x 100.

As used herein the term "extensible" means elongatable in at least one direction, but not necessarily recoverable.

As used herein the term "percent stretch" refers to the ratio determined by measuring the increase in the stretched dimension and dividing that value by the original dimension. i.e. (increase in stretched dimension/original dimension) x 100.

As used herein the term "set" refers to retained elongation in a material sample following the elongation and recovery, i.e. after the material has been stretched and allowed to relax during a cycle test.

As used herein the term "percent set" is the measure of the amount of the material stretched from its original length after being cycled (the immediate deformation following the cycle test). The percent set is where the retraction curve of a cycle crosses the percent elongation axis. The remaining strain after removal of the applied stress is measured as the percent set.

The "load loss" value is determined by first elongating a sample to a defined elongation in a particular direction (such as the CD) of a given percentage (such as 70, or 100 percent as indicated) and then allowing the sample to retract to an amount where the amount of resistance is zero. The cycle is repeated a second time and the load loss is calculated at given elongation, such as at the 50 percent elongation. Unless otherwise indicated, the value was read at the 50 % elongation level (on a 70 percent elongation test) and then used in the calculation. For the purposes of this application, the load loss was calculated as follows:

$$\frac{\text{Cycle 1 extension tension (at 50 \% elongation) - cycle 2 retraction tension (at 50 \% elongation)}}{\text{Cycle 1 extension tension (at 50 \% elongation)}} \times 100$$

For the test results reflected in this application, the defined elongation was 70 percent unless otherwise noted. The actual test method for determining load loss values is described below.

As used herein, "filler" is meant to include particulates and/or other forms of materials which can be added to a film polymer extrusion material which will not chemically interfere with or adversely affect the extruded film and further which are capable of being dispersed throughout the film. Generally the fillers will be in particulate form with average particle sizes in the range of about 0.1 to about 10 microns, desirably from about 0.1 to about 4 microns. As used herein, the term "particle size" describes the largest dimension or length of the filler particle.

As used herein the terms semi-crystalline, predominantly linear polymer and semi-crystalline polymer shall refer to polyethylene, polypropylene, blends of such polymers and copolymers of such polymers. For such polyethylene-based polymers, such term shall be defined to mean polymers having a melt index of greater than about 5g/10 min, but desirably greater than 10 g/10 min (Condition E at 190°C, 2.16kg) and a density of greater than about 0.910 g/cc, but desirably greater than about 0.915 g/cc. In one embodiment, the density is between about 0.915 g/cc and 0.960 g/cc. In a further alternative embodiment, the density is between about 0.917 g/cc and 0.960 g/cc. In still a further alternative embodiment, the density is between about 0.917 g/cc and 0.923 g/cc. In still a further alternative embodiment, the density is between about 0.923 g/cc and 0.960 g/cc. For such polypropylene based polymers, such term shall be defined to mean polymers having a melt flow rate (230° C, 2.16 kg) greater than about 10g/ 10 min., but desirably greater than about 20 g/10 min., and having a density in the range between about 0.89 g/cc and 0.90 g/cc.

As used herein, the term "breathable" refers to a material which is permeable to water vapor. The water vapor transmission rate (WVTR) or moisture vapor transfer rate (MVTR) is measured in grams per square meter per 24 hours, and shall be considered equivalent indicators of breathability. The test is conducted at body temperature (37°C). The term "breathable" desirably refers to a material which is permeable to water vapor having a minimum WVTR (water vapor transmission rate) of desirably about 100 g/m$^2$/24 hours. Even more desirably, such material demonstrates breathability greater than about 300 g/m$^2$/24 hours. Still even more desirably, such material demonstrates breathability greater than about 1000 g/m$^2$/24 hours. The WVTR of a fabric, in one aspect, gives an indication of how comfortable a fabric would be to wear. WVTR is measured as indicated below. Often, personal care product applications of breathable barriers desirably have higher WVTRs and breathable barriers of the present invention can have WVTRs exceeding about 1,200 g/m$^2$/24 hours, 1,500 g/m$^2$/24 hours, 1,800 g/m$^2$/24 hours or even exceeding 2,000 g/m$^2$/24 hours.

Unless otherwise indicated, percentages of components in formulations are by weight.

Test Method Procedures

Cycle Testing:

The materials were tested using a cyclical testing procedure to determine load loss and percent set. In particular single cycle testing was utilized to 70 percent defined elongation. For this test, the sample size was 3 inch in the MD by 6 inch in the CD. The grip size was 3 inch width. The grip separation was 4 inch. The samples were loaded such that the cross-direction of the sample was in the vertical direction. A preload of approximately 10-15 grams was set. The test pulled the sample at 20 inches/min (500 mm/min) to 70 percent elongation (2.8 inches in addition to the 4 inch gap), and then immediately (without pause) returned to the zero point (the 4 inch gauge separation). Inprocess testing (resulting in the data in this application) was done as a single cycle test. The testing was done on a Sintech Corp. constant rate of extension tester 2/S with a Renew MTS mongoose box (controller) using TESTWORKS 4.07b software. (Sintech Corp, of Cary, NC). The tests were conducted under ambient conditions.

The present invention relates to the formation of a laminate from flexible sheet materials. The flexible sheet materials of the present invention are such that when used in a laminate will provide the desired barrier, aesthetic, tactile and/or extensibility properties.

One such flexible sheet material used is nonwoven webs. Nonwoven web materials suitable for use in the method of this invention may be, for example, selected from the group consisting of spunbond, meltblown, spunbond-meltblown-spunbond laminates, coform, spunbond-film-spunbond laminates, bicomponent spunbond, bicomponent meltblown, biconstituent spunbond, biconstituent meltblown, bonded carded web, airlaid and combinations thereof.

The nonwoven web materials are preferably formed with polymers selected from the group including polyolefins, polyamides, polyester, polycarbonates, polystyrenes, thermoplastic elastomers, fluoropolymers, vinyl polymers, and blends and copolymers thereof. Suitable polyolefins include, but are not limited to, polyethylene, polypropylene, polybutylene, and the like; suitable polyamides include, but are not limited to, nylon 6, nylon 6/6, nylon 10, nylon 12 and the like; and suitable polyesters include, but are not limited to, polyethylene terephthalate, polybutylene terephthalate and the like. Particularly suitable polymers for use in the present invention are polyolefins including polyethylene, for example, linear low density polyethylene, low density polyethylene, medium density polyethylene, high density polyethylene and blends thereof; polypropylene; polybutylene and copolymers as well as blends thereof. Additionally, the suitable fiber forming polymers may have thermoplastic elastomers blended therein.

Nonwoven fabrics which are used in such laminates, prior to conversion into such laminates, desirably have a basis weight between about 10 g/m$^2$ and 50 g/m$^2$ and even more desirably between about 12 g/m$^2$ and 25 g/m$^2$. In an alternative embodiment such nonwoven fabrics have a basis weight between about 15 g/m$^2$ and 20 g/m$^2$.

Another flexible sheet material used is polymeric films. Such polymeric films provide a barrier to fluids while remaining flexible and can be apertured, slit, filed, monolithic, breathable, extensible, stretchable or combinations thereof. Examples of such films are described in WO 96/19346 to McCormack et al.

While it should be recognized that flexible sheet materials can be chosen from a broad spectrum of materials, nonwoven webs and polymeric films are used hereunder for illustrative purposes.

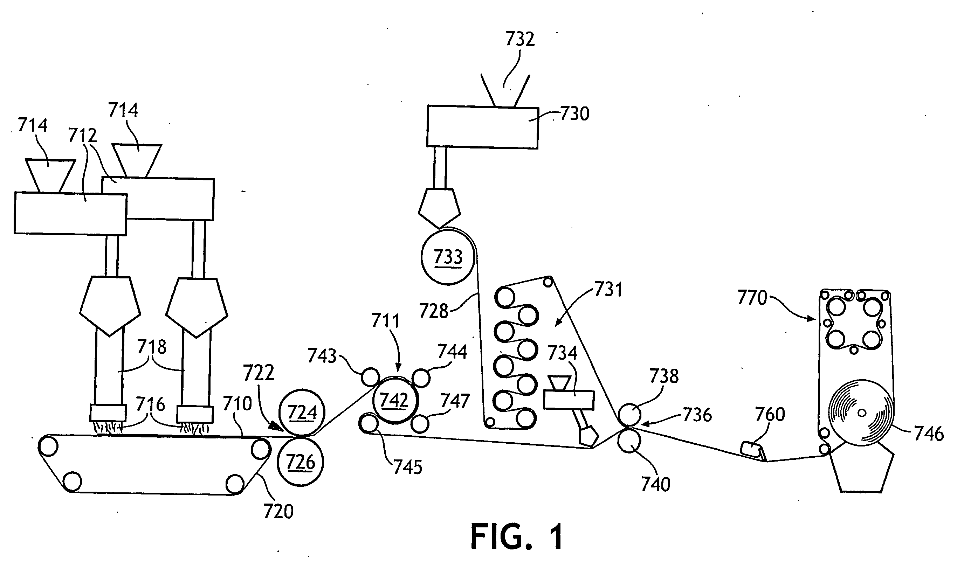

Fig. 1 is a schematic illustration of a laminating process incorporating the stretching process and apparatus of the present invention. Specifically, Fig. 1 illustrates a process for laminating a nonwoven web to a polymeric film. As shown, a nonwoven web 710 is formed by feeding extruders 712 from polymer hoppers 714 and forming continuous filaments 716 from filament formers 718 onto web former 720. The resulting web 710 is bonded at calender nip 722 formed by a patterned roll 724 and anvil roll 726, one or both of which may be heated to a thermal bonding temperature. After bonding, web 710 is stretched in accordance with the invention using satellite groove roll stretching unit 711 having grooved anvil roll 742 and satellite rolls 743, 744, 747, 745 and an adhesive is applied to the web at adhesive station 734. Film 728 is formed by feeding extruder 730 from polymer hopper 732 and casting onto chill roll 733. The film 728 is stretched by a machine direction orienter (MDO) 731 and the film and nonwoven web are combined at nip 736 between rolls 738, 740 maintained at a desired adhesive bonding temperature. The laminate is then directed to a slitter 760, if slitting is desired, and to temperature controlled section 770 to chill, retract and/or anneal as desired. Finally, the laminate is directed to winder 746 or, optionally, directed to further processing. Also, stretching of one or more of the component layers individually and as a laminate may be carried out in accordance with the invention.

Fig. 1 illustrates a process where both the film and the nonwoven are produced in-line with the remainder of the laminating process. Alternatively, the film and/or the nonwoven may be provided to the laminating process as pre-formed material rolls.

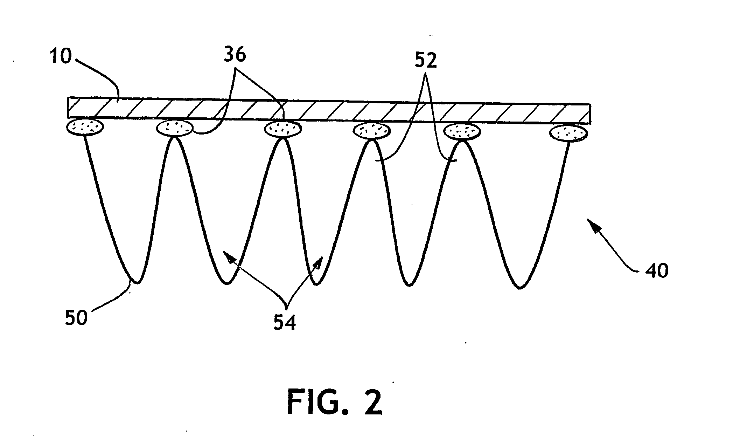

Fig. 2 is a representation of a cross-sectional view of the material laminate produced by the inventive method as illustrated in Fig. 1. When the first flexible sheet material 50 is stretched by the satellite groove roll stretching unit 711, the corrugated surface of the first flexible sheet material 50 will be made up of a series of alternating surface contacting peaks 52 and recessed troughs 54 between the peaks 52. Ideally, the first flexible sheet material 50 will be attached to the second flexible sheet material 10 with the adhesive 36 only at the discrete points where the peaks 52 of the first flexible sheet material 50 contact the second flexible sheet material 10.

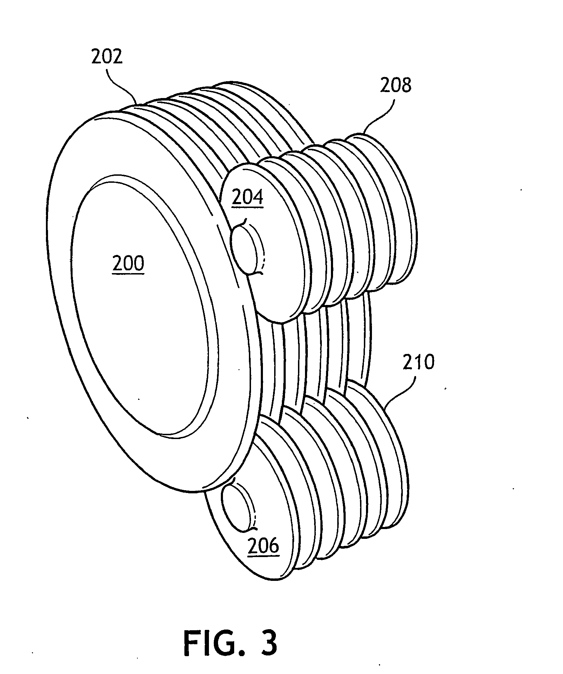

The groove roll arrangement of the inventive method may be single rolls immediately adjacent one another such that the peaks of one roll lie in the valleys of an adjacent roll (as previously described), or alternatively, they be a single or main anvil roll that is encircled by smaller satellite rolls. For instance, in one embodiment, the nonwoven support layer or laminate may be coursed through a grooved roll arrangement in which a main anvil roll is encircled by one or more satellite rolls. Such an arrangement is illustrated in Figure 3. A device for stretching such fabrics is described in US Application bearing Attorney Docket Number 19078 PCT, Serial Number PCT/US03/26247 titled Multiple Impact Device and Method for Treating Flexible Webs, to Robert James Gerndt et al. filed August 22, 2003.

The rolls may be constructed of steel or other materials satisfactory for the intended use conditions as will be apparent to those skilled in the art. Also, it is not necessary that the same material be used for all the rolls, and the anvil roll, for example, may be constructed of hard rubber or other more resilient material so as to impart less stressful conditions on the flexible web. Additionally, the rolls may be heated electrically or the roll may have double shell construction to allow a heating fluid such as a mixture of ethylene glycol and water to be pumped through the roll and provide a heated surface.

As can be seen in Fig. 3, an anvil roll includes about its periphery a series of grooves in the anvil and satellite rolls which run concentrically around the rolls and, therefore, the web is stretched in the widthwise or cross machine direction. As shown, anvil roll 200 includes grooves 202 and is positioned in working engagement with satellite rolls 204, 206, also having grooves 208 and 210, respectively. It will be apparent that the number of engaging rolls and the engagement depth of the respective rolls may be varied, and the rolls may be partially or fully grooved to provide zoned or full stretching along the roll length as desired. The rolls are desirably driven at speeds matched to the desired effective engagement by one or more motors (not shown).

As shown in Fig. 3, the anvil roll 200 is engaged by satellite rolls 204 and 206 which operate to apply a stretching force to a laminate (or nonwoven support material) as the laminate passes through each of the nips formed between the anvil and satellite rolls. In this case, the grooves of one of the satellite rolls extend into mating grooves of the anvil roll to a lesser extent than do the grooves of the other satellite roll. In this manner, stretching forces applied to the laminate may be gradually increased so that there is a reduced tendency to tear or otherwise damage the laminate and yet stretch to a high degree. It will be apparent that varying the mating engagement of the rolls in this manner may be done with any or all of the satellite rolls and may occur in any order of increasing or decreasing engagement as desired.

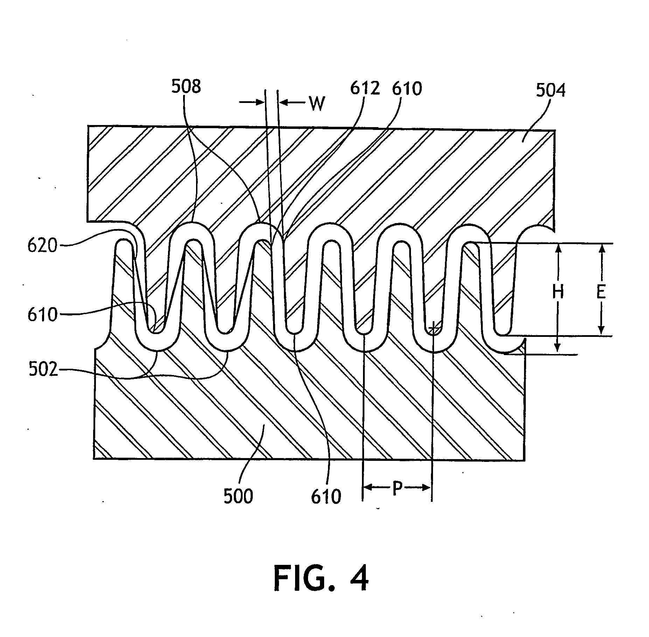

FIG. 4 is an enlarged partial cross sectional view of an engaged nip, for example, for the embodiment of FIG. 3 showing the path of web travel, While, for purposes of more clearly illustrating the nip, the path of web 620 is only shown partiality across the nip, it will be apparent that the web may and will normally extend completely across the nip.

As shown, the grooves 502 of anvil roll 500 intermesh or accommodate the fins 610 between the grooves 508 of satellite roll 504. The intermeshing, in this case, maintain spacing, W, between the respective groove walls 610, 612 that is wider than the thickness of web 620 with the result that the web is generally stretched without being compressed. As shown, H measures the wall height, and E measures the depth of engagement. The number of grooves per inch, N, is measured by counting the number of walls, tip to tip, per inch along the roll, sometimes also called "pitch".

The number of grooves may be varied widely to achieve desired results. For examples, for stretching of lightweight laminates of film and nonwoven for disposable personal care product applications such as a backing/outercover component, the number of grooves useful may vary from about 3 to about 15 per inch (7.6 to about 38.1 per cm), although greater or fewer are contemplated. For instance, in one particular embodiment, the number of grooves is between about 5 and 12 grooves per inch (12.7 and 30.5 grooves per cm). In a further alternative embodiment, the number of grooves is between 5 and 10 per inch (12.7 and 25.4 per cm). Essentially, in one particular embodiment, the peak to peak distance of the fins, shown as length P in Fig. 4, may be varied from about 0.333 inch (0.85 cm) to about 0.0666 inch (1.7 cm). In an alternative embodiment the peak to peak distance may be between about 0.200 inch (0.5 cm) to about 0.083 inch (0.21 cm). The engagement of the fins and grooves of the grooved rolls may be from about 0 to 0.300 inch (0 to 0.76 cm). In an alternative embodiment, the engagement of fins in grooves is between about 0.010 inch (0.025 cm) to about 0.200 inch (0.51 cm). In another embodiment, the engagement may be between about 0.070 inch (0.18 cm) to about 0.150 inch (0.38 cm). Desirably, in one embodiment the total stretch of the material in the CD direction is between about 2.0-2.75 X and an engagement of between about 0.100 inch (0.25 cm) to about 0.150 inch (0.38 cm) (at about 8 grooves per inch (20.5 grooves per cm)). Such conditions are desirable for a prelamination stretching of a nonwoven material prior to lamination to a film. For such applications, it may be important that the compression of the material be avoided, and the shape of the intermeshing grooves may be selected for that purpose. Furthermore, the depth of engagement as the grooves intermesh may also be varied so as to achieve the desired stretch level. It is a feature of the present invention that high stretch levels may be attained in localized areas in steps of engagement that avoid single, harsh impact that might damage fragile materials.

In addition to increasing the desired stretch level through increased engagement of the grooved rolls, the effectiveness of the use of grooved rolls can be increased through control of the tension of the nonwoven web as well as by heating the nonwoven web and the grooved rolls. This effectiveness can be seen in the amount of incremental cross-machine direction stretch found when all other parameters are held constant. Tension and heat can be adjusted to provide incremental increases to the overall all level of incremental stretch that is imparted to the nonwoven web.

By maintaining machine direction tension of the nonwoven web as the nonwoven web passes through the grooved roll apparatus, the effectiveness of the incremental cross-machine direction stretch is increased. When there is stack in the nonwoven web the web can freely move across its width to some degree. Thus, rather than fully stretching between the ridges of the fins of the grooved rolls, the nonwoven web "slips" between those same ridges. In other words, the width of the nonwoven web decreases as the web "slips" to conform to the contours of the surfaces of the grooved rollers.

When tension is maintained in the machine direction of the nonwoven web, the web will have loss ability to "slip" in the cross-machine direction. The tension in the machine direction can be maintained with the use of an S-wrap place in the web path prior to the grooved roll apparatus and/or through the use of tension unwinds. When tension is maintained the nonwoven web then can be incrementally stretched to greater degree between the ridges of the fins of the grooved rolls than when the nonwoven web is not held in tension. With higher levels of web tension, the incremental cross-machine stretching will become more effective.

Preheating the nonwoven web prior to entering the grooved roll apparatus and heating the grooved rolls will increase the effectiveness of the grooved rolls in stretching the nonwoven web. By heating the nonwoven web and the grooved rolls, the modulus of the web can be reduced and thus increase the ease of incremental cross-machine stretching. The nonwoven web can be heated with the use of a hot air knife or any other similar device as known in the art for heating material webs. Generally, the nonwoven web will be heated with air that is 120°F to 250°F (49°C to 121.1°C). Similarly, the grooved rolls are heated to a temperature of 120°F to 250°F (49°C to 121.2 °C).

In making the extensible or stretchable laminate of the present invention, the use of a nonwoven web that has been grooved rather than using necked nonwoven facings provides for greater machine utilization efficiencies. The extensibility of laminates produced with grooved nonwoven depends on the degree that the nonwoven facing is grooved. Through control of web tension, the width of the grooved nonwoven exiting the grooved roll apparatus can be maintained to the same width of the nonwoven that enters the grooved roll apparatus. Therefore, the grooved material can have a high degree of cross-machine direction extensibility while fully maintaining web width and thus maximizing the utilization of material web width.

Additionally, the effect of grooving can be enhanced by necking the grooved nonwoven facings after the grooved roll apparatus and prior to lamination. If the grooved nonwoven is necked, less necking is needed to achieve the same level of extensibility as by necking alone because some of the extensibility is delivered by the incremental cross-machine direction stretch imparted by grooving the material. As less necking is required of a grooved nonwoven versus a non-grooved nonwoven, there will be a smaller resultant reduction of web width to achieve the same resultant level of extensibility. Thus, for the same level of extensibility, a better efficiency of machine width utilization can be found with the use of grooved nonwoven facings that have been necked than can be found with necked nonwoven facings.

One issue with the use of grooved nonwoven webs is the durability and integrity of nonwoven webs that have been stretched by high levels of engagement of the grooved rolls. Higher levels of engagement can mean a lower durability and integrity in the resultant grooved nonwoven web. The high degree of stretching softens the web and breaks fiber bonds of the nonwoven web. Decreasing the level of engagement of the grooved rollers can increase integrity and durability, but also results in the decrease in the amount of the incremental cross-machine stretch and thus decreases the amount of available extensibility (or stretchability) in the final extensible (or stretchable) laminate. However, the integrity and durability of the web and the amount of extensibility/stretchability can be balanced with necking the grooved nonwoven web to some degree prior to attachment to the polymeric film. As discussed above, necking the grooved nonwoven web will decrease the efficiency of the utilization of width. In the end however, efficiency of web width utilization is balanced with the need for available cross-machine extensibility/stretchability and desired level of nonwoven integrity and durability.

Bonding occurs through slot adhesive system. An adhesive bonding system 734 is illustrated in Fig. 1. Such a system is a slot coat adhesive system. Such slot coat adhesive systems are available from the Nordson Corporation, of Lüneburg, Germany. For example, an adhesive applicator die is available from Nordson under the designation BC-62 Porous Coat® model. Such a die may be held on a coating stand such as the NT 1000 series coating stand. It has been found that slot coating adhesive processes provide for more uniform adhesive coverage, over a wide range of adhesive viscosities.

It has been found that slot coat adhesive processes provide unique attributes over spray adhesive processes. Adhesive is applied to the nonwoven after the nonwoven is grooved (and necked, if necked at all). At this point in the process the grooved nonwoven has a corrugated surface made up of a series of alternating surface contacting peaks 52 and recessed troughs 54 between the peaks. When spray adhesive is applied to such a grooved nonwoven, the placement of the adhesive is generally uniform throughout the surface of the nonwoven. When such a nonwoven is attached to a polymeric film in a nip the entire surface of the grooved nonwoven, both peaks and troughs, tends to bond with the film. The resulting laminate has a very low level of extensibility and low bulk.

Alternately, when slot coat adhesive processes are used, the adhesive is placed at discrete points on the grooved nonwoven web 50. The adhesive 36 is placed on the peaks 52 of the grooved nonwoven 50 and not in the troughs 54. Generally, a slot coat adhesive process produces a continuous thin film of adhesive. However, when a grooved nonwoven, having peaks and troughs, is passed by the die tip of the slot coat apparatus, the adhesive undergoes a stick-attenuate/break-truncate phenomenon. The adhesive wets and bonds to the peaks of the passing grooved nonwoven web and then is stretched and thinned until the adhesive cohesively fails. The adhesive is broken into discrete portions of adhesive that remain on the peaks of the grooved nonwoven. The slot coat adhesive is not applied to the troughs of the grooved nonwoven. When the grooved nonwoven with slot coat adhesive is bonded to a polymeric film, the bonding occurs merely between the film 10 and the discrete points where the grooved nonwoven 50 meets the film 10. The extensibility of such a laminate made with slot coat adhesive is greater than that of a similar laminate made with spray adhesive. Because bonding only occurs at discrete points, the grooved nonwoven of the laminate has some amount of free travel, namely the length of nonwoven web between bond points. This free travel allows the laminate to extend at the tension required to extend the film alone for a distance until the grooved nonwoven web is fully extended between the discrete bond points. This allows for a higher extension at lower tensions than current laminates using spray adhesive.

The same effect would be found for a stretchable nonwoven laminate that uses a stretchable film rather than an extensible film

The placement of the adhesive on the discrete peaks of the grooved nonwoven is controllable by optimizing the adhesive characteristics, adhesive temperature, amount of adhesive used, nip pressure and degree of processing of the grooved nonwoven. The slot coat process will tend to place the adhesive on the peaks of the grooved laminate but controlling the adhesive by these variables will insure that the adhesive will stay primarily on the peaks throughout processing of the laminate. The optimized adhesive will have optimized characteristics, including melt temperature, rheology, and open time, such that adhesive will stay placed on the peaks rather than flow from the peaks and into the troughs of the grooved nonwoven.

The nip pressure used to laminate the grooved nonwoven with slot coat adhesive to the polymeric film will also determine the ability to bond in only discrete points. If too much nip pressure is used, the adhesive will be squeezed from the peaks of the grooved nonwoven through the nonwoven and into the troughs of the same nonwoven. The higher the nip pressure, the greater degree that adhesive will be forced from the peaks of the grooved nonwoven to other portions of the grooved nonwoven. Alternately, if too little nip pressure is used there can be inadequate bonding between the polymeric film and the grooved nonwoven. Lower nip pressure can be balanced by adhesive formulation with higher tackiness.

In a similar way the degree of processing will also affect the placement of the adhesive. When the grooved nonwoven and/or laminate undergo a higher degree of processing before the adhesive has fully set, the adhesive will be caused to flow from its placement on the peaks. Again the formulation of the adhesive can be balanced against the degree of processing by providing a formulation that will set up to an appropriate level relative to the processing being used. This would likely require an adhesive that has a shorter open time when dealing with higher machine speeds or more tortuous machine paths for the laminate.

The placement of the adhesive on peaks of the grooved nonwoven and subsequently bonding the grooved nonwoven to a polymeric film only at those discrete points allows for reduced adhesive requirements and lower laminate costs. As discussed above, slot coat adhesive processes place the adhesive only on the peaks of the grooved nonwoven as opposed to the entire surface of a non-grooved nonwoven. When using the same rate of adhesive application via the slot coat process, a simple mass balance reveals that the peaks of grooved nonwoven will have a greater incremental amount of adhesive than the same area would have if it were a non-grooved nonwoven. Effectively, the adhesive that would normally be present in the troughs of the grooved nonwoven is remaining on the peaks.

This additional amount of adhesive on the peaks of the grooved nonwoven is more than is necessary to make a secure bond between the polymeric film and the grooved nonwoven. As discussed above, using more adhesive than needed to bond the nonwoven to the polymeric film will tend to create a situation where the excessive adhesive will try to flow from the peaks to other portions of the grooved nonwoven. Therefore, less adhesive is required for an adequate bond and less is desired in order to keep the adhesive on the peaks of the nonwoven. The use of less adhesive means that overall adhesive used in the laminate will be reduced along with corresponding laminate material costs.

The adhesive used in the present invention must be suitable for slot coat adhesive processes and must be able to bond the flexible sheet materials. It is also desired that the adhesive maintain the bond when the laminate is extended or stretched in use. Examples of suitable adhesives that may be used in the practice of the invention include Rextac 2730, 2723 available from Huntsman Polymers of Houston, TX, as well as adhesives available from Bostik Findley, Inc, of Wauwatosa, WI, such as H9375-01.

The inventive film laminate may be incorporated in numerous personal care products. For instance, such material is particularly advantageous as a stretchable outer cover for various personal care products. Additionally, such film laminate may be incorporated as a base fabric material in protective garments such as surgical or hospital drapes. In still a further alternative embodiment, such material may serve as base fabric for protective recreational covers such as car covers and the like.

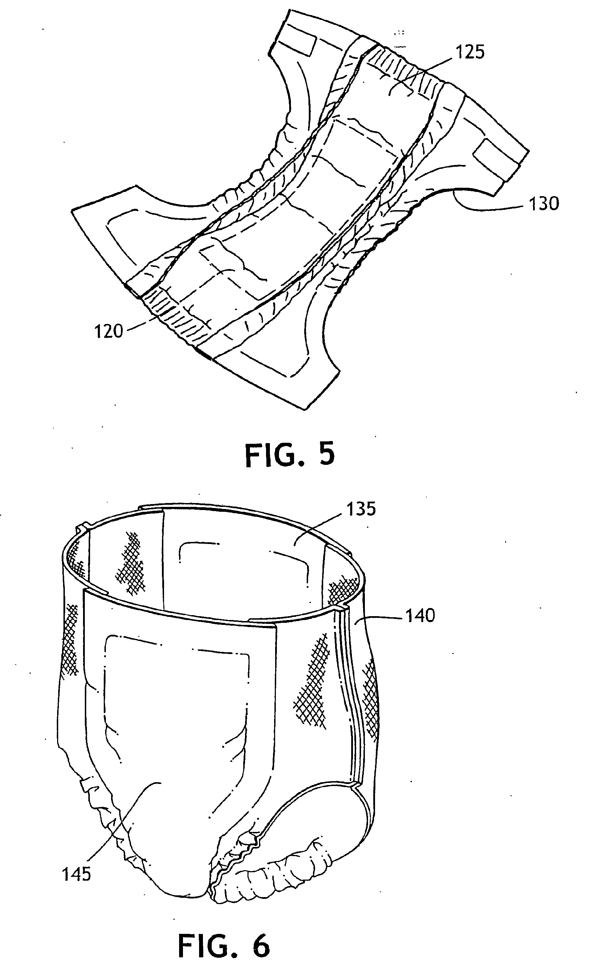

In this regard, FIG. 5 is a perspective view of an absorbent article, such as a disposable diaper of the present invention in its opened state. The surface of the diaper which contacts the wearer is facing the viewer. With reference to FIG 5, the disposable diaper generally defines a front waist section, a rear waist section, and an intermediate section which interconnects the front and rear waist sections. The front and rear waist sections include the general portions of the article which are constructed to extend substantially over the wearer's front and rear abdominal regions, respectively, during use. The intermediate section of the article includes the general portion of the article that is constructed to extend through the wearer's crotch region between the legs.

The absorbent article includes an outer cover 130, a liquid permeable bodyside liner 125 positioned in facing relation with the outer cover, and an absorbent body 120, such as an absorbent pad, which is located between the outer cover and the bodyside liner. The outer cover in the illustrated embodiment coincides with the length and width of the diaper. The absorbent body generally defines a length and width that are less than the length and width of the outer cover, respectively. Thus, marginal portions of the diaper, such as marginal sections of the outer cover, may extend past the terminal edges of the absorbent body. In the illustrated embodiment, for example, the outer cover extends outwardly beyond the terminal marginal edges of the absorbent body to form side margins and end margins of the diaper. The bodyside is generally coextensive with the outer cover but may optionally cover an area which is larger or smaller than the area of the outer cover, as desired.

The outer cover and bodyside liner are intended to face the garment and body of the wearer, respectively, while in use. The film laminate of the present invention may conveniently serve as the outercover in such an article, providing a barrier, an aesthetically pleasing appearance and a pleasant tactile touch.

Fastening means, such as hook and loop fasteners, may be employed to secure the diaper on a wearer. Alternatively, other fastening means, such as buttons, pins, snaps, adhesive tape fasteners, cohesives, mushroom-and-loop fasteners, or the like, may be employed. In this regard, the inventive material may be used as the loop material as part of a stretchable outercover.

The diaper may also include a surge management layer located between the bodyside liner and the absorbent body to prevent pooling of the fluid exudates and further improve the distribution of the fluid exudates within the diaper. The diaper may further include a ventilation layer (not illustrated) located between the absorbent body and the outer cover to insulate the outer cover from the absorbent body to reduce the dampness of the garment facing surface of the outer cover.

The various components of the diaper are integrally assembled together employing various types of suitable attachment means, such as adhesive, sonic bonds, thermal bonds or combinations thereof. In the shown embodiment, for example, the bodyside liner and outercover may be assembled to each other and to the absorbent body with lines of adhesive, such as a hotmelt, pressure-sensitive adhesive. Similarly, other diaper components, such as elastic members and fastening members, and surge layer may be assembled into the article by employing the above-identified attachment mechanisms. The article of the invention desirably includes the film laminate as a stretchable outer cover which encompasses a stretchable fabric layer which is operatively attached or otherwise joined to extend over a major portion of the outward surface of the article. In regions where the stretchable outercover is not affixed to non-stretchable portions of the article or otherwise restricted from extending, the stretchable outer cover can be free to advantageously expand with minimal force. In desired aspects, the outer cover can be stretchable along the longitudinal direction, lateral direction, or along a combination of both the lateral and longitudinal directions. In particular, it is desirable that the portion of the stretchable outer cover located in the waist sections are capable of extending in the lateral direction to provide improved fastening of the article about the wearer and improved coverage of the hips and buttocks of the wearer particularly in the rear waist section and enhanced breathability in the waist sections. For example, if the fasteners and or side panels are located along the side edges in the rear waist section of the diaper, at least a portion of the outercover in the rear waist section will desirably extend to provide enhanced coverage over the buttocks of the wearer in use for improved containment and aesthetics.

Moreover, it is also desirable that at least portions of the stretchable outer cover located over the absorbent body can extend during use for improved containment. For example, as the absorbent body absorbs fluid exudates and expands outwardly, the stretchable outer cover can readily elongate and extend in correspondence with the expansion of the absorbent body and/or other components of the article to provide void volume to more effectively contain the exudates. The stretchable outer cover of the present invention is desirably capable of providing a selected stretch when subjected to an applied tensile force, and the ability to retract upon removal of such applied force.

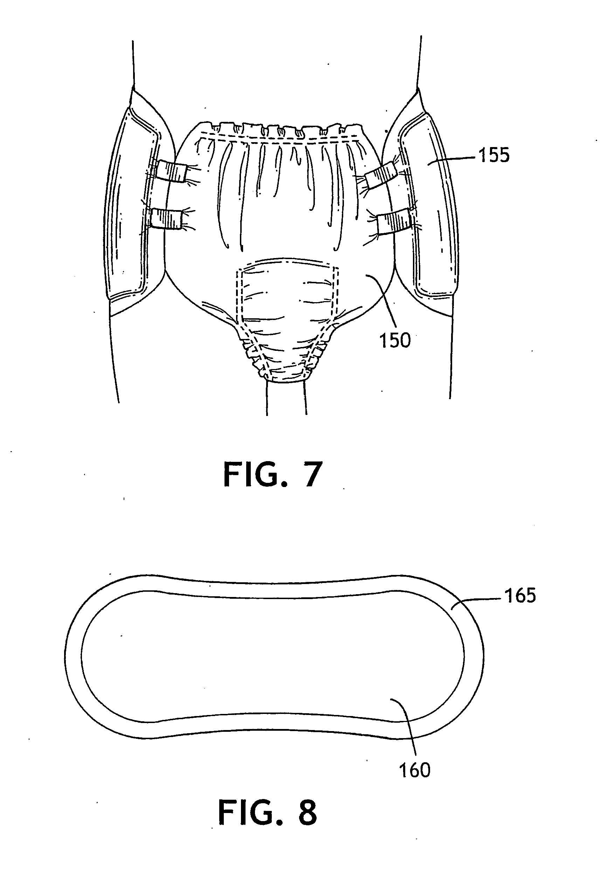

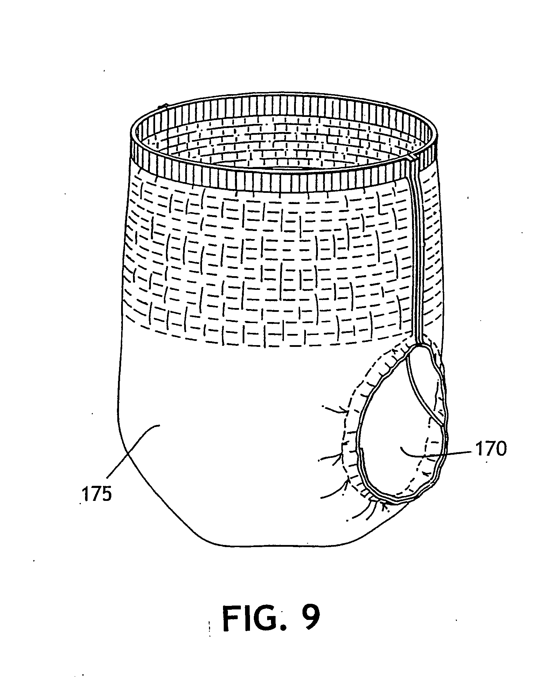

As can be seen in the various other absorbent personal care product embodiments, the inventive material may be used as an "outer cover" in a variety of product applications including a training pant, underpant, feminine care product, and adult incontinence product. For instance, as can be seen in Figure 6, the distinctive film laminate can serve as the outercover on both the back 135 and front portions of a training pant, separated by distinct elastic side panels 140. Alternatively, the inventive material can serve as a continuous full outercover on the front and back, as well as the side panel areas (as elastic side panels). As can be seen in Figure 7, the distinctive film laminate can serve as an outercover in an underpant, such as either 150 or 155. As can be seen in Figure 8, the distinctive film laminate can serve as an outercover/backsheet 165 in a feminine care pantiliner 160. As can be seen in Figure 9, the distinctive film laminate can serve in an adult incontinence product as an outercover 175. Additionally such film laminate may serve as a sanitary napkin coversheet or a diaper liner, or further processed such by being apertured and the like, before being used as base materials in such products or product applications.

A series of examples were developed to demonstrate and distinguish the attributes of the present invention. Such Examples are not presented to be limiting, but in order to demonstrate various attributes of the inventive material.

Examples

The invention will be illustrated by examples which are representative only and not intended to limit the invention which is defined by the appended claims and equivalents. Modifications and alternatives will be apparent to those skilled in the art and are intended to be embraced by the invention as claimed.

The examples were carried out with equipment under the following conditions unless stated otherwise in the examples:

Conditions

A fibrous nonwoven web was unwounded with a 9.5 Psi unwind tension and then introduced into a nip of intermeshing grooved steel rolls at a velocity of 99 meters/min (325 ft/min). Each roll had a width (end to end) of about 66cm (26") with the diameter of the satellite groove rolls about 27cm (10.6") and the diameter of the main center groove roll about 45cm (17.85"). Each groove was formed with a depth of 0.39cm (0.154") and with a peak to peak distance of 0.31cm (0.125") resulting in a maximum draw ratio of 2.8x. The engagement of the grooved roll was set for each code to obtain the desired level of incremental stretch. The fibrous nonwoven web was heated to a temperature of 93°C (200°F) whine it passed through a hot air knife and the two temperature controlled nips between grooved rolls. The spunbond was drawn in the machine direction between the groove roll unit and the winder causing the cross-machine direction width to be maintained to its original width of 50.8 cm (20").

Example 1

In Example 1, a film/nonwoven laminate was produced. The film layer was comprised of 75% calcium carbonate which was dispersed into a polymeric carrier resin. The calcium carbonate, available from Omya, Inc. North America of Proctor, Vermont, and designated as 2SST, has an average particle size of 2 microns with a top cut of 8-10 microns and a coating of approximately 1% stearic acid. The polymeric carrier resin which comprises 25% of the blend was a Dowlax® 2517 LLDPE resin supplied by Dow Chemical U.S.A. of Midland Michigan. Dowlex® 2517 has a density of 0.917 g/cc and a melt index of 25. The 75/25 blend of calcium carbonate and LLPE resin was subsequently blended with 33% of Septon 2004® which is a SEPS based styrenic block copolymer to provide a final calcium carbonate concentration of 67% by weight. The Septon® resin is available from Septon Company of America of Pasadena, Texas.

The formulation was formed into a film by casting onto a chili roll set to 38°C (100°F) at an unstretched basis weight of approximately 64 gsm. The film was stretched 3.6 times its original length using an MDO, and retracted 33% resulting in a stretched basis weight of approximately 33 gsm. As used herein, stretching 3.6 times means that a film which, for example, had an initial length of 1 meter if stretched 3.6 times would have a final length of 3.6 meters. The film was heated to a temperature of 125°F (52°C) and was run through the MDO at a line speed of 445 feet per minute to impart the stretch to the film. The film was then retracted and annealed at a temperature of 150°F (66°C) across multiple rolls at a line speed of 330 feet per minute (100 metres per minute).

The fibrous nonwoven web was made of a 0.45 osy spunbond web made with Exxon 3155 polypropylene, produced by ExxonMobil Corporation, which was made generally as described in US Published Patent Application US 2002-0117770 to Haynes et al., incorporated herein by reference in its entirety. The web was bonded using a wire weave bond pattern, looking as the name suggests, e.g. like a window screen and having a bond area in the range of from about 15% to about 20% and about 302 bonds per square inch.

The nonwoven web was stretched by the grooved roll apparatus using a grooved roll engagement of 0.090 inches (0.23 cm).

Lamination of the film and nonwoven layer was accomplished using adhesive lamination with a Nordson BC-62 Porous Coat slot coat adhesive system, as produced by Nordson Corporation of Dawsonville, GA. Findley HX9375 adhesive, produced by Bostik Findley Inc. of Wauwautosa, WI, was melted to a temperature of 177°C (350°F) and applied to the spunbond sheet with an add-on level of 1.0 gsm. The stretched spunbond web and film were then joined together by a laminating nip and using a nip pressure of 2 PLI and 5 % draw at the upper roll to maintain the SB dimension stability at the time of lamination with the film.

The laminate was then minimally retracted 2% in the machine direction between the lamination unit and the first roll in an annealing unit, maintaining its width. The laminate was then annealed and cooled using 4 temperature control rolls. The laminate with the spunbond side in contact with the rolls was heated at 82°C (180°F) over two rolls and then cooled at 16°C (60°F) over the next two rolls to set the final CD stretch material properties. Finally the material was carried with minimal retraction to the winder for a final basis weight of 48 gsm.

Example 2

In Example 2, another film/nonwoven laminate was produced. The film layer and fibrous nonwoven web was the same as used in Example 1. The groove roll engagement was 0.070 inches and the stretched nonwoven web was necked 10% in the cross-machine direction prior to lamination to the film.

The annealing of the laminate was also performed in the same manner and under the same conditions as Example 1.

Example 3

In Example 3, another film/nonwoven laminate was produced. The film layer was the same as used in Example 1. The fibrous nonwoven web was a 20 gsm spunbond web supplied by BBA Fiberweb of Biesheim, France under the trade name of Sofspan® 120. The spunbond web was unwounded with a 9.5 Psi unwind tension and then introduced into the nip formed by two intermeshing grooved steel rolls at an engagement of 0.100 inches (0.25 cm) at same temperature and velocity conditions used in Example 1.

Lamination of the two layers was performed in the same manner and under the same conditions as in Example 1. The grooved roll processing of the nonwoven and subsequent annealing of the laminate was also performed in the same manner and under the same conditions as Example 1.

Example 4

In Example 4. another film/nonwoven laminate was produced, The film layer and fibrous nonwoven web was the same as used in Example 1. The grove roll engagement used on the nonwoven was 0.100 inches (0.25 cm). Lamination was performed in the same manner and under the same conditions as in Example 1. The annealing process of the laminate was also performed in the same manner and under the same conditions as Example 1.

Comparative 1

In Comparative 1, a film/nonwoven laminate was produced. The film layer and the nonwoven layer are the same as those used in Examples 3 except that the nonwoven layer was not grooved.

Lamination of the two layers was performed in the same manner and under the same conditions as in Example 1 except that an adhesive add-on of 1.5gsm was used.

Comparative 2

In Comparative 2, a film/nonwoven laminate was produced. The film layer was the same as used in Example. 1. The nonwoven layer was a 17 gsm spunbond web produced using 3155 polypropylene and was necked 50% in the cross-machine direction to a final basis weight of approximately 21.4 gsm. The nonwoven layer was not subjected to the grooved roll stretching.

Lamination of the film and nonwoven layer was accomplished using adhesive lamination by the slot coat adhesive system of Example 1. Rextac® 2730 adhesive, produced by Huntsman Polymers Corporation in Odessa, Texans, was melted to a temperature of 177°C (350°F) and applied to the nonwoven layer with an add-on level of 1.77 gsm

The test data for Laminate Examples above is described in the following Table 1.

TABLE 1

| Sample | Facing Used | Grooved Roll Engagement | CD Necking | Extension Force @ 50% strain |
|---|---|---|---|---|
| Example 1 | 3155 | 0.090" | None | 559 g |
| Example 2 | 3155 | 0.070" | 10% | 626 g |
| Example 3 | BBA | 0.100" | None | 256 g |
| Example 4 | 3155 | 0.100" | None | 354 g |
| Comparative 1 | BBA | None | None | 1219 g |
| Comparative 2 | 3155 | None | 50% | 566 g |

The extension force at 50% strain was found using the single cycle test which was conducted on referenced material samples taken in the cross-machine direction. Values reflect cross-machine direction extension force performance at 50% elongation. It is desirable that such stretchable laminates demonstrate extension forces less than 800g at 50 percent material elongation.

The above Table demonstrates that the present invention provides the ability to obtain the desirable extension at a desired extension force while efficiently utilizing more of the full width of the webs provided than previous used with necked facings. As can be seen in a comparison of Example 3 and Comparative 1, grooving the nonwoven web imparts to the film-nonwoven laminate the desired stretch at the desired level of tension. A comparison of Example1 and Example 4 shows the effect of increasing the engagement of the grooved rolls. With the higher level of engagement in Example 4, the nonwoven is stretched to a higher degree and yields a stretchable laminate that can achieve the same extension as Example 1, but at a lower tension (or conversely, Example 1 can achieve a higher extension at the same tension as Example 4).

Comparison of Example 1, Example 2 and Comparative 2 shows that a grooved nonwoven web can provide the film/nonwoven laminate with the same extension at similar tensions as provided by a necked nonwoven material. However, the nonwoven of Comparative 2 is necked 50% which means that twice as much nonwoven width is required to produce the film/nonwoven laminate of Comparative 2 than is required to produce the film/nonwoven laminate of Example 1. Similarly, Comparative 2 needs 1.8 times more nonwoven width than is required by Example 2 to make the same finished film/nonwoven laminate width.

While the invention has been described in detail with reference to specific embodiments thereof, it should be understood that many modifications, additions and deletions can be made thereto without departure from the scope of the invention as set forth In the following claims

**Claims**

1. A method of producing a laminate material comprising the steps of

   a. providing a first flexible sheet material (50);
   b. providing a second flexible sheet material (10) having a first surface and a second surface;
   c. providing a forming surface (200) having grooves (202) formed therein;
   d. providing a plurality of mating surfaces (204; 206) having fins (208; 210) positioned to fit within the grooves (202) of said forming surface;
   e. forming successive nips between the forming surface (200) and the mating surfaces (204; 206) wherein the fins (208; 210) of the mating surfaces (204; 206) enter the grooves (202) of the forming surface (200) at separate locations on the forming surface (200).
   f. feeding said first flexible sheet material (50) into the successive nips while maintaining the position of said first flexible sheet material (50) with respect to said forming surface (200);
   g. stretching said first flexible sheet material (50) a plurality of times along lines on the first flexible sheet material (50) by the fins entering the forming surface grooves (202) along with said first flexible sheet material (50), within successive nips;
   h. applying adhesive to said first flexible sheet material (50) with a slot coat adhesive process; and
   i. joining the stretched first flexible sheet material (50) in a face to face configuration to the first surface of the second flexible sheet material (10).

2. The method of claim 1 wherein the fins of said successive mating surface (204; 206) enter the grooves (202) of respective successive nips to a different degree providing a different amount of stretch to said first flexible sheet material (50) at different nips.

3. The method of claim 1 wherein said forming surface (200) is a drum and said plurality of mating surfaces (204; 206) are satellite rolls positioned at different locations with respect to said drum (200).

4. The method of claim 1 wherein said first flexible sleet material (50) is stretched in the cross-machine direction.

5. The method of claims 1 wherein said stretching is along lines having a frequency of about 3 per inch to about 15 per inch.

6. The method of claim 1 wherein said first flexible sheet material (50), prior to stretching, has a basis weight in the range of from about 10 gsm to about 150 gsm.

7. The method of claim 1 further including the step of stretching the second flexible sheet material (10) in the machine direction before it is joined to the stretched first flexible sheet material (50).

8. The method of claim 1 where first flexible sheet material (50), after stretching, has a corrugated surface comprised of a series of surface contacting peaks separated by recessed troughs therebetween and is joined to the second flexible sheet material (10) at discrete points comprising where the series of surface contacting peaks of the stretched first flexible sheet material (50) contact the first surface of the second flexible sheet material (10).

9. The method of claim 8 where the adhesive is applied substantially to the series of surface contacting peaks of the first flexible sheet material (50).

10. Method according to claims 4 and 8, where the adhesive is applied substantially to the surface contacting peaks of the first flexible sheet material (50).

**Patentansprüche**

1. Ein Verfahren zur Herstellung eines Laminatmaterials, welches die Schritte umfasst:

   a. Bereitstellen eines ersten flexiblen Bahnmaterials (50);
   b. Bereitstellen eines zweiten flexiblen Bahnmaterials (10), welches eine erste Oberfläche und eine zweite Oberfläche aufweist;

c. Bereitstellen einer Formieroberfläche (200), welche darin geformte Rillen (202) aufweist;

d. Bereitstellen einer Vielzahl von Vereinigungsoberflächen (204; 206), welche Grate (208; 210) aufweisen, die angeordnet sind, um in die Rillen (202) der Formieroberfläche zu passen;

e. Bilden von aufeinanderfolgenden Spalten zwischen der Formieroberfläche (200) und den Vereinigungsoberflächen (204; 206), wobei die Grate (208; 210) der Vereinigungsoberflächen (204; 206) in die Rillen (202) der Formieroberfläche (200) an verschiedenen Orten der Formieroberfläche (200) eintreten;

f. Führen des ersten flexiblen Bahnmaterials (50) in die aufeinanderfolgenden Spalte während des Aufrechterhaltens der Position des ersten flexiblen Bahnmaterials (50) in Bezug auf die Formieroberfläche (200);

g. Dehnen des ersten flexiblen Bahnmaterials (50) mehrmals entlang von Linien auf dem ersten flexiblen Bahnmaterial (50) durch das Eintreten der Grate in die Rillen (202) der Formieroberfläche zusammen mit dem ersten flexiblen Bahnmaterial (50) in aufeinanderfolgenden Spalten;

h. Aufbringen von Haftmittel auf das erste flexible Bahnmaterial (50) mit einem Schlitzbeschichtungshaftverfahren; und

i. Verbinden des gedehnten ersten flexiblen Bahnmaterials (50) in einer zugewandten Konfiguration mit der ersten Oberfläche des zweiten flexiblen Bahnmaterials (10).

2. Das Verfahren gemäß Anspruch 1, wobei die Grate der aufeinanderfolgenden Vereinigungsoberflächen (204; 206) in die Rillen (202) der entsprechenden aufeinanderfolgenden Spalte mit einem verschiedenen Grad eintreten, wobei ein unterschiedliches Ausmaß an Dehnung des ersten flexiblen Bahnmaterials (50) bei verschiedenen Spalten bereitgestellt wird.

3. Das Verfahren gemäß Anspruch 1, wobei die Formieroberfläche (200) eine Trommel ist und wobei die Vielzahl an Vereinigungsoberflächen (204; 206) Satellitrollen sind, die an verschiedenen Positionen in Bezug auf die Trommel (200) angeordnet sind.

4. Das Verfahren gemäß Anspruch 1, wobei das erste flexible Bahnmaterial (50) in der Quermaschinenrichtung gedehnt wird.

5. Das Verfahren gemäß Anspruch 1, wobei das Dehnen entlang von Linien erfolgt, welche eine Häufigkeit von ungefähr 3 pro Zoll bis ungefähr 15 pro Zoll aufweisen.

6. Das Verfahren gemäß Anspruch 1, wobei das erste flexible Bahnmaterial (50), vor dem Dehnen, ein Flächengewicht in einem Bereich von ungefähr 10 g/m$^2$ bis ungefähr 150 g/m$^2$ aufweist.

7. Das Verfahren gemäß Anspruch 1, welches des Weiteren den Schritt des Dehnens des zweiten flexiblen Bahnmaterials (10) in der Maschinenrichtung beinhaltet, bevor es mit dem gedehnten ersten flexiblen Bahnmaterial (50) verbunden wird.

8. Das Verfahren gemäß Anspruch 1, wobei das erste flexible Bahnmaterial (50), nach dem Dehnen, eine gewellte Oberfläche aufweist, eine Reihe von oberflächenkontaktierenden Bergen umfassend, welche durch ausgenommene Rinnen dazwischen getrennt sind, und welche mit dem zweiten flexiblen Bahnmaterial (50) an einzelnen Punkten verbunden ist, umfassend wo die Reihe an oberflächenkontaktierenden Bergen des gedehnten ersten flexiblen Bahnmaterials (50) die erste Oberfläche des zweiten flexiblen Bahnmaterials (10) kontaktiert.

9. Das Verfahren gemäß Anspruch 8, wobei das Haftmittel im Wesentlichen auf die Reihe von oberflächenkontaktierenden Bergen des ersten flexiblen Bahnmaterials (50) aufgebracht wird.

10. Verfahren gemäß einem der Ansprüche 4 und 8, wobei das Haftmittel im Wesentlichen auf die oberflächenkontaktierenden Berge des ersten flexiblen Bahnmaterials (50) aufgebracht wird.

## Revendications

1. Procédé de fabrication d'un matériau laminé, comprenant les étapes qui consistent à

a. fournir un premier matériau sous forme de feuille flexible (50) ;

b. fournir un deuxième matériau sous forme de feuille flexible (10) comportant une première surface et une deuxième surface ;

c. fournir une surface de formation (200) comportant des gorges (202) formées dans celle-ci ;

d. fournir une pluralité de surfaces appariées (204 ; 206) comportant des nervures (208 ; 210) positionnées pour se mettre en place dans les gorges (202) de ladite surface de formation ;

e. former des zones de contact successives entre la surface de formation (200) et les surfaces appariées (204 ; 206), dans lesquelles les nervures (208 ; 210) des surfaces appariées (204 ; 206) pénètrent dans les gorges (202) de la surface de formation (200) à des emplacements séparés sur la surface de formation (200) ;

f. introduire ledit premier matériau sous forme de feuille flexible (50) dans les zones de contact successives tout en maintenant la position dudit premier matériau sous forme de feuille flexible (50) par rapport à ladite surface de formation (200) ;

g. étirer ledit premier matériau sous forme de feuille flexible (50) une pluralité de fois le long de lignes sur le premier matériau sous forme de feuille flexible (50) par la pénétration des nervures dans les gorges (202) de la surface de formation conjointement avec ledit premier matériau sous forme de feuille flexible (50) dans des zones de contact successives ;

h. appliquer un adhésif sur ledit premier matériau sous forme de feuille flexible (50) en utilisant un procédé d'enduction par filière plate ; et

i. réunir le premier matériau sous forme de feuille flexible étiré (50), dans une configuration face à face, avec la première surface du deuxième matériau sous forme de feuille flexible (10).

2. Procédé selon la revendication 1, dans lequel les nervures desdites surfaces appariées successives (204 ; 206) pénètrent dans les gorges (202) de zones de contact successives respectives à un différent degré en produisant un différent degré d'étirage dudit premier matériau sous forme de feuille flexible (50) dans différentes zones de contact.

3. Procédé selon la revendication 1, dans lequel ladite surface de formation (200) est un tambour et ladite pluralité de surfaces appariées (204 ; 206) est constituée de rouleaux satellites positionnés à différents emplacements par rapport audit tambour (200).

4. Procédé selon la revendication 1, dans lequel ledit premier matériau sous forme de feuille flexible (50) est étiré dans le sens travers.

5. Procédé selon la revendication 1, dans lequel ledit étirage est exécuté le long de lignes ayant une fréquence d'environ 3 par pouce à environ 15 par pouce.

6. Procédé selon la revendication 1, dans lequel ledit premier matériau sous forme de feuille flexible (50), avant l'étirage, a un grammage d'environ 10 g/m$^2$ à environ 150 g/m$^2$.

7. Procédé selon la revendication 1, comprenant en outre l'étape d'étirage du deuxième matériau sous forme de feuille flexible (10) dans le sens machine avant sa réunion avec le premier matériau sous forme de feuille flexible étiré (50).

8. Procédé selon la revendication 1, dans lequel le premier matériau sous forme de feuille flexible (50), après l'étirage, a une surface ondulée constituée d'une série de crêtes en contact avec une surface séparées par des creux en retrait entre celles-ci et est réuni avec le deuxième matériau sous forme de feuille flexible (10) à des points discrets comprenant les endroits où la série de crêtes en contact avec une surface du premier matériau sous forme de feuille flexible étiré (50) se trouve en contact avec la première surface du deuxième matériau sous forme de feuille flexible (10).

9. Procédé selon la revendication 8, dans lequel l'adhésif est appliqué fondamentalement sur la série de crêtes en contact avec une surface du premier matériau sous forme de feuille flexible (50).

10. Procédé selon les revendications 4 et 8, dans lequel l'adhésif est appliqué fondamentalement sur les crêtes en contact avec une surface du premier matériau sous forme de feuille flexible (50).

FIG. 1

FIG. 2

FIG. 3

EP 1 711 343 B1

**FIG. 4**

EP 1 711 343 B1

**FIG. 5**

**FIG. 6**

FIG. 7

FIG. 8

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6383431 B1
- EP 0556749 A
- US 4340563 A
- US 3692618 A
- US 3802817 A
- US 3338992 A
- US 3341394 A
- US 3542615 A
- US 3849241 A, Butin
- US 4818464 A, Lau
- US 4100324 A, Anderson
- US 4041203 A, Brock
- US 5169706 A, Collier
- US 5145727 A, Potts
- US 5178931 A, Perkins
- US 5188885 A, Timmons
- US 5108820 A, Kaneko
- US 4795668 A, Krueger
- US 5540992 A, Marcher
- US 5336552 A, Strack
- US 5382400 A, Pike
- DE 2513251 A1
- US 5277976 A, Hogle
- US 5466410 A, Hills
- US 5069970 A
- US 5057368 A, Largman
- US 5108827 A
- US 5294482 A, Gessner
- US 3855046 A, Hansen and Pennings
- US 4374888 A, Bornslaeger
- WO 9619346 A, McCormack
- US 0326247 W
- US 20020117770 A, Haynes

**Non-patent literature cited in the description**

- **John A. Manson ; Leslie H. Sperling.** Poylmer Blends and Composites. Plenum Press, 1976, 273-277